# EUROPEAN PATENT APPLICATION

(11) **EP 2 474 389 A1**
(43) Date of publication of application: **11.07.2012**
(21) Application number: 10848229.0
(22) Date of filing: 09.07.2010
(51) Int. Cl.: B24B 35/00

(54) **METHOD FOR PREVENTING WEAR OF MONOCRYSTALLINE DIAMOND TOOLS BY APPLYING MULTIPLE PHYSICAL FIELDS DURING ULTRAPRECISION MACHINING**

(30) Priority: 22.03.2010 CN 201010129448
(71) Applicant: Tianjin University, Tianjin 300072 (CN)
(72) Inventor: FANG, Fengzhou, Tianjin 300072 (CN); ZHANG, Hongwei, Tianjin 300072 (CN); QIU, Zhongjun, Tianjin 300072 (CN); HU, Xiaotang, Tianjin 300072 (CN)
(74) Representative: Tergau & Walkenhorst
(86) International application number: PCT/CN2010/075086
(87) International publication number: WO 2011/116567

(57) **Abstract**

A method for preventing the wear of monocrystalline diamond tools by applying multiple physical fields during ultra-precision machining is disclosed, wherein dislocation form of lower energy state will appear by applying different physical fields such as electric field, magnetic field and laser irradiation around the diamond tool so as to change the construction of crystal interface and interfacial energy. Consequently, solid transformation will appear in the materials during the cutting process of nano-scale precision so as to change the cutting characteristic of the materials and prevent the wear of monocrystalline diamond tools during ultra-precision machining. The method can be mainly used for ultra-precision machining.

## Description

### FIELD OF THE INVENTION

This invention is related to preventing the wear of monocrystalline diamond tools during ultra-precision machining, specifically related to methods for preventing the wear of monocrystalline diamond tools by applying multiple physical fields during ultra-precision machining.

### BACKGROUND OF THE INVENTION

Monocrystalline diamond tools are widely used in ultra-precision cutting processing, which has become the main manufacturing method in high precision optical devices and high precision moulds. However, when machining ferrous metals especially the steel materials which is most extensively used in engineering, the chemical tool wear is very obvious. Research result shows that the key factor in determining the chemical tool wear is that some solid state phase change happens, which is also called the graphitization.

Over these years, researchers from all over the world have been working on the wear patterns and wear mechanisms of diamond tools and proposed some methods for preventing the wear, but the results are not very ideal. These methods can be basically divided into three types: special treatment of tool materials, special treatment of workpiece materials and improvement of manufacturing process.

For special treatment of cutting tools, one method is to use the protective coatings, such as TiN and TiC, which are used to establish a diffusion barrier. Kloche et al. from WZL lab in Germany, use the process of PVD (physical vapor deposition) to create a TiN protective coating, which is also a try from the perspective of materials chemistry. However, the coating adhesion and hardness are far less than that of diamond. The coating contacted with workpiece during machining is very easy to wear and the effect in reducing the wear of diamond tools is not obvious. Its practical application is limited.

For special treatment of workpiece materials, Ekkard Brinksmeier's research group from University of Bremen, and F. Z. Fang's research group from Tianjin University tried to solve this problem based on heat treatment and they has achieved a better effect by nitriding steel materials. However, there remain some difficulties in its application in engineering practice.

For improvement of manufacturing process, researchers tried cryogenic cutting or machining in protective gases environment such as nitrogen or argon, or introducing tool ultrasonic vibration and so on. C. Evans from USA used liquid nitrogen and cryogenic clamping system to cool the diamond tool and cut stainless steel workpiece at about -140°C. As only temperature is considered in their research, the effect of preventing the wear of monocrystalline diamond tools is limited. The Lawrence Livermore national laboratory of California University in the United States carried out a processing test under carbon saturated condition, using methane gas as a shielding gas, and a certain effect was achieved. Zhe-Jun Yuan, from Harbin institute of Technology, injected the pulverized liquid nitrogen into the cutting zone, by which they achieved some improvement. However, the two methods (cryogenic cutting and injecting protecting gas) are generally not suitable for application in mass production. Moriwaki and Shamoto from Kobe University in Japan adopted the method of ultrasonic vibration assisted processing technology, which is more successful than other methods for preventing the wear of monocrystalline diamond tools. Through cutting stainless steel parts by applying ultrasonic vibration to the cutting tools in the cutting direction, or cutting hardened steel parts by applying elliptical vibration to cutting tools, good results have been achieved. But since the ultrasonic vibration can introduce ripple to the workpiece surface, which affects the roughness of machined surfaces, it is difficult to gain optical surface. It is also very difficult to guarantee the precision when processing surfaces. In China, Beijing University of Aeronautics and Astronautics, Harbin Institute of Technology and Dalian University of Technology etc. also conducted research of processing steel materials using monocrystalline diamond tool with the assisted ultrasonic vibration, but the experimental results should be improved further. In addition, E. Brinksmeier's group from Bremen University in Germany conducted an experiment by combining the three methods: cryogenics, protective gas and ultrasonic vibration. However, compared with the introduction of ultrasonic vibration alone, improvement is not obvious.

The above-mentioned methods, such as nitriding the machined surface, filling processing zone with inert gas and applying ultrasonic vibration to cutting tools, can not solve the problem of tool wear in mass processing production fundamentally. So far, researchers still can not find a practical method which could prevent or reduce the wear of monocrystalline diamond tools during nano-cutting process effectively.

### Contents of the invention

In order to overcome the shortcomings of the current technology, the purpose of this invention is to offer a kind of applying multi-physical-field method during ultra precision cutting process by using monocrystalline diamond tools. This method could prevent diamond tool wear caused by cutting ferrous metal material. It presents a new approach to the research of ultra-precision cutting ferrous metal material.

To achieve the above-mentioned purpose, the technical scheme of the invention is as follows : Physical fields are applied to the neighborhood of the diamond tool. Physical fields include electric field, magnetic field or laser induced or radiation. Through achieving dislocation with low-energy state and changing the crystal interface structure and interfacial energy, solid-state phase changes can be achieved during the nano-scale cutting process. Consequently, it can improve the cutting performance of materials and prevent the monocrystalline diamond tool wear in the ultra-precision processing.

The loading mode of the above-mentioned method about applying physical fields to the neighborhood of the diamond tool is as follows: one or many loading actuators are disposed around the diamond tool to generate small physical fields. These components are attached to the diamond tool and move following the diamond tool simultaneously. Also, by using motor system controlled by microprocessor, the pose of one or many units that generate multi-physics fields can be adjusted. Thus, according to the specific processing object and processing environment, the poses of one or many loading actuators that generate small physical fields can be adjusted relative to the diamond tool. Also, according to the properties of the loading actuators that generate physical fields, the corresponding signal producing circuit or modulation circuit is designed, which provide the loading actuators with excitation signal with different frequency, phase and amplitude.

The above-mentioned signals produced by signal generating circuit or modulation circuit include DC signal, AC signal or pulse signal. The signal generating circuit or modulation circuit mentioned is used for adjusting the amplitude of DC voltage or current signal. The signal generating circuit or modulation circuit mentioned is used for adjusting the amplitude, frequency and phase of AC voltage or current signal. The signal generating circuit or modulation circuit mentioned is used for adjusting the amplitude, frequency, phase and duty cycle of the pulse signal current or voltage signal.

The above-mentioned method by applying physical fields to the neighborhood of the diamond tool is to apply magnetic field to micro-contact processing area by electromagnetic coils and adjust excitation signal and the turns, area, magnetic conductivity of the electromagnetic coils by signal generating circuit.

The above-mentioned method by applying physical fields to the neighborhood of the diamond tool is to apply magnetic field to the micro-contact processing area by electrode and adjust excitation signal by signal generating circuit.

The above-mentioned method by applying physical fields to the neighborhood of the diamond tool is as follows: Let laser beam beat down on the micro-contact processing area, adjust excitation signal by signal generating circuit, and the type of modulation technique includes continuous modulation, pulse modulation or pulse code modulation.

This invention has the following technical effect: by applying physical fields, such as electric field, magnetic field, laser radiation etc., to the micro-contact processing area, the process of cutting ferrous metal material using diamond tools can be affected, the crystal interface structure and interfacial energy can be changed; diamond graphitization process can be prevented. In this way, it can change the cutting performance of materials, improve the machining precision and the quality of the machined surface, and realize the stable ultra precision cutting at nanometer level.

### Description of figures

- Figure 1: shows the diagram of the cutting performance of different elements by monocrystalline diamond tool^{[1]}
- Figure 2: shows the carbon phase diagram of temperature-pressure^{[2]}
- Figure 3: shows the schematic diagram of nano cutting process in the variable electromagnetic fields.

### The detailed executive process of the invention

The invention is combined with the theoretical analysis results of nano precision cutting mechanism and tool friction and wear and used the theory that electromagnetic field influences phase change process of materials. It studies the following process: through forming the dislocation of low energy state, it will change the crystal interface structure and interfacial energy in the physical fields. The fields are electric field, magnetic field, laser radiation etc. As a result, it can change the solid-state phase of material in the nanometer level precision cutting process. And it can change the cutting performance of material, improve the life of the diamond tool and realize the stable ultra precision cutting at nanometer level. It analyzes the nanometer level precision cutting behavior from the angle of molecule and atom in theory. The influencing rule of the tool wear mechanism in physical field can be confirmed. On the basis of the theoretical analysis, nano cutting experiment system in additional physical field can be established. We also can analyze the physical-chemical characteristic of tools and ferrous metal materials responsive to different physical fields. Finally, we consider the effects of other parameters comprehensively, such as the performance of experimental equipment, and confirm the best technological parameters of nano cutting ferrous metal materials.

Applying magnetic fields to the micro-contact processing area is the key of this invention. There are differences in operation modes of applying different physical fields. Here, applying variable magnetic fields is chosen to analyze as a case.

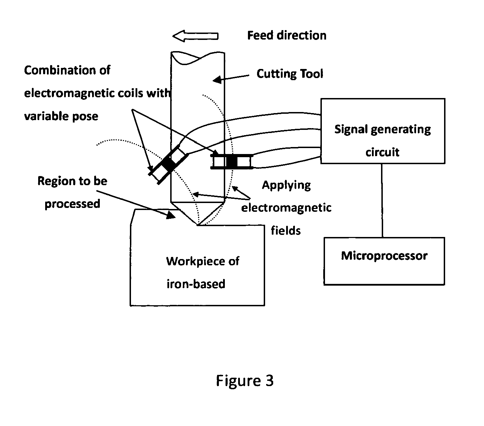

In order to make the magnetic field applied to the micro contact cutting region have enough intensity, the parts that generate whole magnetic field are required to be made up of one or many small electromagnetic coils and can be moved with tool by attaching them to the tool. Their spatial position and posture also can be adjusted according to the specific processing object and processing environment. Apart from the magnetic field distribution change in specific processing area which caused by the different spatial distribution combination of electromagnetic coils, it also requires to design the signal generating circuit depending on coil properties to provide different frequency and different amplitude of the excitation current signal , such as DC signal, AC signal, pulse signal. The generated controllable time-varying magnetic field is applied to the micro cutting region and then influences the physical and thermochemical properties of the machined materials. As one of many important innovations of the present invention, this method of preventing tool wear using variable magnetic fields can be applied to normal machining environment, as shown in Figure 3.

Using microprocessor-controlled signal generation circuit to output multiplex time-varying signals will achieve the specific realization process. Parameters of the electromagnetic coil can be adjusted depending on on-site environment and different machined materials, such as turns, area and magnetic conductivity etc. Waveform of the current signal can be pulse square, triangular, sine and serrate etc. Amplitude, frequency, phase and duty cycle of the current signal are all variable parameter. Microprocessor can change the spatial position and orientation of the multi-coil combination by motor system control.

For the load mode of laser-induced or radiation field, we can change the intensity, frequency and other parameters of output laser by using modulation/demodulation circuit. According to the difference of modulation wave control parameters, laser modulation can be divided into AM, FM and phase-modulation type etc. On the basis of the difference of carrier wave oscillation output mode, it also can be fall into continuous modulation, pulse modulation and pulse code modulation, etc. The device can choose different modulation type depending on specific machined object and machining environment and then project directly laser to the micro contact cutting region.

This invention can use monocrystalline diamond tool processing free-form surface parts. The material of parts is stainless steel.

The wiper edge's arc radius of the diamond tool is 1 mm, the cutting edge's round radius is 20nm, the depth of cut is 10nm, and the feed rate is 1µm/r.

According to the curvature variation of the machining region, the system regulates the spatial position and posture of coils or laser by using stepping motor control.

The coils parameters: middle diameter 8mm; axial length 12mm; number of turns 1962; inductance 12.6mH.

The electric field parameter: electric intensity, 30MV·m⁻¹.

The laser parameters: Nd: YAG laser; the laser power density that acts on stainless steel, 10³W·cm⁻².

The following are some basic analysis results in theory about this invention:

### 1. Analysis of the influence of micro electronic states of different materials on the diamond cutting

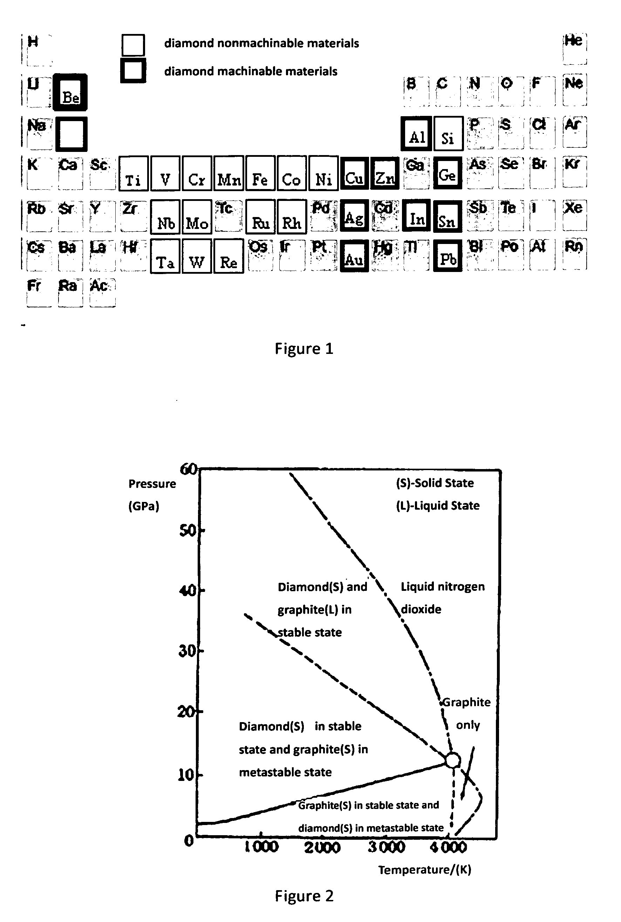

It can be seen from Figure 1, monocrystalline diamond tool is not suitable for ferrous metal cutting. To explain the phenomenon reasonably, it is necessary to analyze the physical and chemical properties of atom and molecule of different elements deeply. Table 1 shows electronic configuration of the atomic ground state of some elements, from which some of the statistical laws can be found. The hypo-outermost electron orbitals of diamond machinable material (widened border & bold) atom are filled, for instance, there are 10 electrons in d orbitals of copper atom which is in saturated state. In contrast, the hypo-outermost electron orbitals of diamond nonmachinable material atom aren't filled, for example, there are only 6 electrons in d orbitals of iron atom. It is necessary to pointed out: most nonmachinable ferrous metals belong to transition metal. The valence shell d orbitals of the nonmachinable ferrous metal aren't filled. The properties of them are markedly different from other elements. Because of the existence of unfilled d orbitals, the transition metal tend to achieve stable state of electrons by using hybridized orbital to accept electrons. That is to say, the transition metal is easy to form metal complex.

Thus, the micro electron state and energy band distribution of ferrous metals determine that they have strong ability of attracting outer electron and then achieve stable state when external conditions provide enough energy. This feature is likely to be the micro level driving force of covalent bond fracture of carbon atom of the diamond tool and graphite reconstruction.

### 2. Analysis of the influence of different material macro electrical characteristics on the diamond cutting

**Table 1. Electron configuration of some elements of electrically ground state neutral atom**

| Atomic number | Element name | Chemical symbol | Electron number of each electron shell | | | | |
|---|---|---|---|---|---|---|---|
| | | | K | L | M | N | O |
| | | | 1s | 2s | 3s 3p | 4s 4p | 5s 5p |
| | | | | 2p | 3d | 4d 4f | 5d 5f |
| **12** | **magnesium** | **Mg** | **2** | **2 6** | **2** | | |
| **13** | **aluminum** | **Al** | **2** | **2 6** | **2 1** | | |
| 21 | scandium | Sc | 2 | 2 6 | 2 6 1 | 2 | |
| 22 | titanium | Ti | 2 | 2 6 | 2 6 2 | 2 | |
| 23 | vanadium | V | 2 | 2 6 | 2 6 3 | 2 | |
| 24 | chromium | Cr | 2 | 2 6 | 2 6 5 | 1 | |
| 25 | manganese | Mn | 2 | 2 6 | 2 6 5 | 2 | |
| 26 | iron | Fe | 2 | 2 6 | 2 6 6 | 2 | |
| 27 | cobalt | Co | 2 | 2 6 | 2 6 7 | 2 | |
| 28 | nickel | Ni | 2 | 2 6 | 2 6 8 | 2 | |
| **29** | **copper** | **Cu** | **2** | **2 6** | **2 6 10** | **1** | |
| **30** | **zinc** | **Zn** | **2** | **2 6** | **2 6 10** | **2** | |
| 41 | niobium | Nb | 2 | 2 6 | 2 6 10 | 2 6 4 | 1 |
| 42 | molybdenum | Mo | 2 | 2 6 | 2 6 10 | 2 6 5 | 1 |
| 44 | ruthenium | Ru | 2 | 2 6 | 2 6 10 | 2 6 7 | 1 |
| 45 | Rhodium | Rh | 2 | 2 6 | 2 6 10 | 2 6 8 | 1 |
| **47** | **silver** | **Ag** | **2** | **2 6** | **2 6 10** | **2 6 10** | **1** |
| **49** | **indium** | **In** | **2** | **2 6** | **2 6 10** | **2 6 10** | **2 1** |
| **50** | **tin** | **Sn** | **2** | **2 6** | **2 6 10** | **2 6 10** | **2 2** |

In General, metals have good conductivity. Electrical characteristics of metal materials are determined to their composition, atomic structure, energy band structure and texture and can be influenced through external factors - such as temperature, pressure, deformation, and heat-treatment etc. - that change internal structure or texture of metal materials.

Ferrous metals have higher temperature coefficient of resistance than general pure metals. Under the temperature 300K, the resistance of Mn, Fe and Ni is significantly greater than nonferrous metals such as Al, Cu etc. As the cutting temperature increasing gradually, the resistance of ferrous metals will increase much more rapidly.

This seems to be analyzed as a reference index.

Therefore, the resistance of ferrous metals is greater than nonferrous metals. The ferrous metal crystal have less carriers, which means that the possibility of losing electrons decreases and the possibility of getting electrons increases. This character also can promote the solid phase change of diamond tool carbon atoms.

### 3. Property analysis of diamond and graphite and their transformation mechanism under high temperature and pressure

Diamond and graphite are allotrope of carbon, but they have different arrangement of atoms. Diamond that is made of covalent bond carbon atom is tetrahedron space net structure atomic crystal; graphite is a layer structure of the transitional crystal, whose carbon atom formed hexagon net structure with covalent bond. The distance between layers of graphite carbon atom is larger and the interaction between layers equals to intermolecular force. Diamond is the hardest material and doesn't conduct , whereas graphite has lower hardness and good electric conductivity. Graphite carbon atom layer can slip with respect to the other. Because diamond and graphite both are constituted of carbon, their chemical properties are similar.

Every carbon atom of diamond form single covalent bond with other 4 adjacent carbon atoms by sp3-hybrid orbital and share 2 valence electrons. But every carbon atom of graphite form o bond with other 3 adjacent carbon atoms by sp2-hybrid orbital and have a 2p-orbital and a 2p electron. These p-orbitals are parallel to each other and perpendicular to the plane which is consisted of carbon atom sp2- hybrid orbital, forming a large π bond. So the π electrons can move on the whole carbon atom plane, which is similar to the character of metallic bond. Every carbon atom of graphite can share 8/3 valence electrons. Therefore, the bond energy of graphite is larger than that of diamond. Although there is interlayer Van Der Waals Force in graphite crystal, the in-layer covalent of graphite is shorter than the covalent of diamond and its energy is higher. Thus, the chemical property of graphite is more stable than that of diamond. Because there are movable electrons in graphite, the graphite can conduct electricity.

Mutual transformation of diamond and graphite both fall within phase transformation. The transformation moves in the direction of lower energy along the least resistance route. Figure 2 shows the carbon temperature - pressure phase diagram. It can be known that too fast decrease of pressure will lead to serious graphitization phenomenon under high temperature.

### 4. The application of Electromagnetic Processing of Materials

Electromagnetic Processing of Materials (EPM) is defined that electric field or magnetic field will be introduced to the material preparation or processing in order to control the material preparation or processing and product quality, and improve the performance and organization of materials.

The scientific basis of EPM includes electromagnetism, fluid mechanics, thermodynamics, transmission and phase transition theory and plasma engineering, etc. In summary, the influence of the electromagnetic field on the material mainly includes generation of electromagnetic force and heat, and the special effect on phase transition and transmission (such as electric migration, etc). The application range of EPM is very extensive, and it is used in the solidification process of liquid materials and the processing of solid materials. After years of development, EPM has formed a system of interdiscipline, various process means and wide application. According to the characteristics, the electric or magnetic field can be classified as DC electric field, AC electric field, pulse electric field, DC magnetic field, AC magnetic field, fixed magnetic field, mobile magnetic field and rotating magnetic field. Many relevant researches have proved that the specific magnetic field could affect the quality and state of Fe-C atomic.

### References:

[1] Paul E, Evans C, Mangamelli A et al . Chemical Aspects of Tool Wear in Single Point Diamond Turning. Precision Engineering, 1996, 18(1): 4-19.
[2] Wanjia Zhang. A Discussion on the Mechanism of Shock-induced Transformation of Graphite to Diamond. Chinese Journal of High Pressure Physics, 2004 , 18 (3):210-219.

## Claims

1. A method for preventing the wear of monocrystalline diamond tools by applying multi-physical fields during ultra-precision machining, wherein dislocation form of lower energy state will appear by applying physical fields such as electric field, magnetic field or laser irradiation around the diamond tool so as to change the construction of crystal interface structure and interfacial energy; solid state phase transformation will appear in the materials during the cutting process of nano-scale precision so as to change the cutting characteristic of the materials and prevent the wear of monocrystalline diamond tools during ultra-precision machining.

2. According to the method of claim 1, wherein the loading mode of said physical fields applied around the diamond tool as follows: one or many kinds of multi-physical fields are generated by loading actuators and applied to the small area around the diamond tool, the loading actuators are attached on the diamond tool and moved with the diamond tool simultaneously; microprocessor controlling motor system are used to achieve the transformation of the space position and posture of one or many physics field loading units, to make one or many micro physics field loading actuators transform the space position and posture according to the specific processing target and environment; corresponding signal producing circuits or modulation circuits are designed to provide different frequency, phase and amplitude excitation signal according to the attributes of the physics field loading actuators.

3. According to the method of claim 2, wherein the signal producing or modulation circuit that provide excitation signals includes DC signal, AC signal or pulse signal, the signal producing or modulation circuit is used to adjust the current of the DC signal or the amplitude; the signal producing or modulation circuit is used to adjust the current of the DC signal or the amplitude, frequency, phase of the voltage signal; the signal producing or modulation circuit is also used to adjust the current of the impulse signal or amplitude, frequency, phase and duty ratio of the voltage signal.

4. According to the method of claim 2, wherein the physical fields applied around the diamond tool is magnetic field applied using magnet coil to the micro contact processing area, using the signal producing circuit to adjust the excitation signal and the turns, area or magnetic conductivity of the magnet coil.

5. According to the method of claim 2, wherein the physical fields applied around the diamond tool is electric field applied using electrode to the micro contact processing area, using the signal producing circuit to adjust the excitation signal.

6. According to the method of claim 2, wherein the physical fields applied around the diamond tool is induction or radiation applied using laser to the micro contact processing area, and using the modulation circuit to adjust the excitation signal, using different kinds of modulation methods as follows: continuous modulation, pulse modulation or pulse code modulation.

## Amended claims

### Amended claims under Art. 19.1 PCT

**1.** A method for preventing the wear of monocrystalline diamond tools by applying external multi-physical fields during ultra-precision machining, wherein dislocation form of lower energy state will appear by applying different external multi-physical fields such as electric field, magnetic field or laser induction radiation around the contact point between the diamond tool and processed work piece, which scope of the contact area regards the contact point as the centre of a circle and the radius can reach millimeter magnitude or micrometer magnitude, so as to change the construction of crystal interface structure and interfacial energy; solid phase transformation will appear in the materials during the cutting process of nano-scale precision so as to change the cutting characteristic of the materials and prevent the wear of monocrystalline diamond tools during ultra-precision machining.

**2.** According to the method of claim 1, wherein the loading mode of said one or more physical fields applied within micro-area around the diamond tool as follows: one or many kinds of external multi-physics field are generated by loading actuators and applied to the small area around the diamond tool, the loading actuators are attached on the diamond tool and moved with the diamond tool simultaneously; microprocessor controlling motor system are used to achieve the transformation of the space position and posture of one or many physics field loading units, to make one or many micro physics field loading actuators transform the space position and posture according to the specific processing target and environment; corresponding signal producing circuits or modulation circuits are designed to provide different frequency, phase and amplitude excitation signal according to the attributes of the physics field loading actuators.

**3.** According to the method of claim 2, wherein the signal producing or modulation circuit that provide excitation signals includes DC signal, AC signal or pulse signal, the signal producing or modulation circuit is used to adjust the current of the DC signal or the amplitude; the signal producing or modulation circuit is used to adjust the current of the DC signal or the amplitude, frequency, phase of the voltage signal; the signal producing or modulation circuit is also used to adjust the current of the impulse signal or amplitude, frequency, phase and duty ratio of the voltage signal.

**4.** According to the method of claim 2, wherein the physical fields applied within micro-area around the diamond tool is magnetic field applied using magnet coil to the micro contact processing area, using the signal producing circuit to adjust the excitation signal and the turns, area or magnetic conductivity of the magnet coil.

**5.** According to the method of claim 2, wherein the physical fields applied within micro-area around the diamond tool is electric field applied using microelectrode to the micro contact processing area, using the signal producing circuit to adjust the excitation signal.

**6.** According to the method of claim 2, wherein the physical fields applied within micro-area around the diamond tool is induction or radiation applied using laser to the micro contact processing area, and using the modulation circuit to adjust the excitation signal, using different kinds of modulation methods as follows: continuous modulation, pulse modulation or pulse code modulation.

Statement under Art. 19.1 PCT
Method of the invention is different from the common electrode effects method in the Comparison file. In order to highlight the difference, applicants made amendment to the claims 1-6 according to article 19 of the treaty. And they added some limitation, such as "Multi-physical fields" in the claims subject was added to "External multi-physical fields". Especially in the claim 1, "by applying physical fields such as electric field, magnetic field or laser irradiation around the diamond tool" was amended to "by applying different external multi-physical fields such as electric field, magnetic field or laser induction radiation around the contact point between the diamond tool and processed work piece, which scope of the contact area regards the contact point as the centre of a circle and the radius can reach millimeter magnitude or micrometer magnitude". The above amendment did not exceed the record scope of the original application documents. It thus can be seen that firstly method of this invention focuses on applying external physical fields, but in the D1(US7198043B1), it is just putting the electrode on the workpiece or generating potential difference by induction; Secondly, method of this invention emphasizes the additional physical fields effects from the micro-scale even the nano-scale, whereas D1 emphasizes the macro-effects. Method of this invention has significant difference from the method given by the Comparison file.

Though the amended claims under the Article 19 of the treaty can be supported by the whole original application documents , since none of adaptable amendment of the description was made, the claims does not quite tally with partial presentation of the invention content in the description.
